# EUROPÄISCHE PATENTSCHRIFT

(11) **EP 0 406 642 B1**
(45) Veröffentlichungstag und Bekanntmachung des Hinweises auf die Patenterteilung: **06.09.1995**
(21) Anmeldenummer: 90111853.9
(22) Anmeldetag: 22.06.1990
(51) Int. Cl.: C08L 23/10, C08J 5/18

(54) **Biaxial orientierte Polypropylenfolie mit hoher mechanischer Festigkeit**
High strength biaxially oriented polypropylene film
Film de polypropylène orienté biaxialement à haute ténacité

(30) Priorität: 29.06.1989 DE 3921358
(43) Veröffentlichungstag der Anmeldung: 09.01.1991
(73) Patentinhaber: HOECHST AKTIENGESELLSCHAFT, 65926 Frankfurt am Main (DE)
(72) Erfinder: Wilhelm, Thomas, Dr., D-7519 Sulzfeld (DE); Bothe, Lothar, Dr., D-6500 Manz-Gonsenheim (DE); Crass, Günther, D-6204 Taunusstein 4 (DE); Schlögl, Gunter, Dr., D-6233 Kelkheim (DE); Muskalla, Winfried, D-6228 Eltville (DE)

(56) Entgegenhaltungen:
- EP-A- 0 047 634
- EP-A- 0 343 647

## Beschreibung

Die vorliegende Erfindung betrifft eine biaxial orientierte Polypropylenfolie mit hoher mechanischer Festigkeit und ihre Verwendung insbesondere als Trägerfolie für Klebebandanwendungen. Die erfindungsgemäß hergestellte Folie kann dabei sowohl ein- als auch mehrschichtig aufgebaut sein.

Klebebänder mit Polypropylenträgerfolien sind bereits bekannt und in der Literatur beschrieben. Jedoch reichen die mechanischen Werte der heute üblicherweise für dieses Anwendungsgebiet eingesetzten biaxial orientierten Polypropylenfolien nicht für alle Klebebandanwendungen aus.

Die Optimierung der mechanischen Eigenschaften von Polypropylenträgerfolien, insbesondere die Erhöhung des Elastizitätsmoduls in Längsrichtung, ist seit jeher Gegenstand intensiver Bemühungen, weil diese mechanischen Eigenschaften in unmittelbarem Zusammenhang mit der anwendungstechnischen Eignung stehen und somit das Verarbeitungsverhalten direkt bestimmen.

In der Literatur beschriebene Lösungsansätze beinhalten sowohl verfahrenstechnische Lösungen als auch Modifizierungen des Rohstoffes, insbesondere durch Kohlenwasserstoffharze.

Eine Möglichkeit zur Herstellung von hochfesten Polypropylenfolien ist ein drei- oder mehrstufiges Streckverfahren, wie es beispielsweise in der EP-B-0 116 457 beschrieben ist. Ein solches Herstellverfahren hat jedoch den Nachteil, daß es eine zusätzliche Vorrichtung zur Nachlängsstreckung benötigt und dadurch sehr aufwendig ist. Darüber hinaus ist es gegen Störungen im Produktionsablauf, z. B. Folienabrisse, sehr anfällig.

Ferner weisen solche nachlängsgestreckten Folien einen gegenüber lediglich biaxial verstreckten Folien deutlich erhöhten Längsschrumpf auf, der es in der Regel verhindert, daß die Folien eine thermische Trocknung, wie sie nach dem Aufbringen von Klebermassen zum Teil noch üblich ist, ohne unerwünschte Schrumpffalten überstehen.

Die Modifizierung der für die Herstellung von hochfesten Polypropylenfolien verwendeten Rohstoffe mit verschiedenen Kohlenwasserstoffharzen ist beispielsweise in der US-A-3 937 762 beschrieben. Eine solche Rohstoffmodifizierung ermöglicht die Herstellung von Polypropylenfolien, deren mechanische Festigkeit in Längsrichtung gegenüber Folien aus unmodifizierten Rohstoffen deutlich verbessert ist, die Werte nachlängsverstreckter Folien jedoch nicht erreicht, und deren Schrumpf in Längsrichtung ebenfalls relativ hoch ist.

Hervorragende mechanische Eigenschaften lassen sich durch die Kombination eines Harzzusatzes zum eingesetzten Rohstoff mit einem Nachlängsstreckprozeß erzielen. Eine entsprechende Vorgehensweise ist in der EP-A-0 079 520 beschrieben, es werden Elastizitätsmoduln in Längsrichtung von 4 000 bis 6 000 N/mm² erreicht. Allerdings hat auch dieses Verfahren den Nachteil, daß ein aufwendiges und störanfälliges Nachlängsstreckverfahren erforderlich ist.

Der vorliegenden Erfindung lag die Aufgabe zugrunde, eine biaxial orientierte Polypropylenfolie mit hoher mechanischer Festigkeit in Längsrichtung zu entwickeln, die die Werte harzmodifizierter, nach dem konventionellen zweistufigen Streckverfahren hergestellter Folie deutlich übertrifft, die aber die Nachteile eines Nachlängsstreckprozesses wie technische Umbauten an der Produktionsmaschine, Störanfälligkeit durch häufige Folienabrisse und hoher Restschrumpf der fertigen Folie in Längsrichtung vermeidet.

Gelöst wird diese Aufgabe durch eine Folie der eingangs genannten Gattung, deren Kennzeichenmerkmale darin bestehen, daß die biaxial orientierte Polypropylenfolie 69 bis 94,99 % eines Polyolefins, 5 bis 30 % eines natürlichen oder synthetischen Harzes, welches einen Erweichungspunkt von 70 bis 170 °C besitzt, und 0,01 bis 1 % eines Nukleierungsmittels enthält. Die Dicke der Folie beträgt 8-50 µm.

Die Polyolefinkomponente besteht aus isotaktischem Polypropylen mit einer 13-C-NMR-spektroskopisch bestimmten Isotaktizität von größer als 92 %. Eingesetzt werden können jedoch auch Block- oder statistische Copolymere des Propylens oder eine Mischung von Polypropylen mit anderen Alpha-Olefinen.

Die zugesetzten Harze sind bevorzugt ein nichthydriertes Styrolpolymerisat, ein Methylstyrol-Styrol-Copolymerisat, ein Pentadien- bzw. Cyclopentadiencopolymerisat, ein Alpha- oder Beta-Pinen-Polymerisat, Kolophonium oder Kolophoniumderivate sowie Terpenpolymerisate und hydrierte Verbindungen hiervon bzw. ein hydriertes Alpha-Methylstyrol-Vinyltoluol-Copolymerisat. Von diesen Verbindungen können gegebenenfalls Mischungen von mehreren Harzen eingesetzt werden.

Als Nukleierungsmittel werden Stoffe eingesetzt, die die differentialkalorimetrisch bestimmte Kristallisationshalbwertszeit signifikant, d. h. in der Regel um mindestens 25 %, herabsetzen. Die Kristallisationshalbwertszeit wird in der Regel unter isothermen Kristallisationsbedingungen bei 125 °C ermittelt.

Solche Nukleierungsmittel können organische Substanzen sein, vorzugsweise Dibenzylidensorbitol oder chemisch modifizierte Derivate des Dibenzylidensorbitols oder Natrium-Bis-(4-tert.-butylphenyl)phosphat. Weitere einsetzbare Nukleierungsmittel sind beispielsweise Metallsalze der Benzoesäure, vorzugsweise Natriumbenzoat, sowie Chinacridon und Chinacridonderivate.

Auch geeignete anorganische Nukleierungsmittel wie z. B. Talkum, Siliziumdioxid oder Bentonit können eingesetzt werden. Hierbei kommt es vor allem auf eine extrem feine Verteilung des Nukleierungsmittels an.

Erfindungsgemäß ist auch der Einsatz einer Kombination von zwei oder mehreren unterschiedlichen Nukleierungsmitteln.

Die erfindungsgemäße Folie wird in einem zweistufigen Reckverfahren hergestellt. Hierbei wird das Polymere bzw. die erfindungsgemäße Rohstoffmischung in einem Extruder verflüssigt und komprimiert. Die Schmelze wird dann in eine Breitschlitzdüse gepreßt und trifft auf eine Kühlwalze. Der so entstandene Polymerfilm wird dann bei Temperaturen unterhalb des Schmelzpunktes des eingesetzten Polypropylens längs und quer zur Extrusionsrichtung biaxial gestreckt, wobei das Streckverhältnis in Längsrichtung mindestens 6 und das Produkt aus den Streckverhältnissen in Längs- und Querrichtung mindestens 40 und höchstens 72 beträgt.

Im vorgesehenen Anwendungsgebiet haben sich Dicken von 8 bis 50 Mikrometern, insbesondere von 15 bis 40 Mikrometern, besonders bewährt.

Eine besondere Ausführungsform der Erfindung stellt eine Folie dar, die eine Basisschicht aus der beschriebenen Rohstoffkombination enthält, daneben jedoch zusätzlich eine oder zwei Deckschichten, die nicht unbedingt einen Zusatz von Kohlenwasserstoffharzen und/oder Nukleierungsmitteln enthalten. Eine solche Folie kann beispielsweise durch Coextrusion problemlos hergestellt werden. Solche Deckschichten können beispielsweise eine Heißsiegelfähigkeit, eine bessere Verankerung des Klebers oder gute Verarbeitungseigenschaften auf schnellaufenden Maschinen vermitteln. Sie können gegebenenfalls durch geeignete Antiblockmittel und/oder Antistatika modifiziert sein.

Bevorzugt wird die Folie als Trägerfolie für Klebebänder verwendet, aber auch für andere Zwecke, z. B. Verpackungen.

Die Erfindung wird durch die nachstehend aufgeführten Beispiele näher erläutert.

Als Polyolefinkomponente wird bei allen aufgeführten Beispielen ein Polypropylenhomopolymerisat mit einem isotaktischen Anteil von etwa 96 % und einem MFI_{230/2,16} (DIN 53 735) von etwa 2 bis 3 g/10 min eingesetzt. Die Harzkomponente war in den beschriebenen Fällen ein hydriertes Polycyclopentadienharz mit einem Erweichungspunkt von 140 °C, bestimmt nach ASTM E-28, und einer Molmasse Mₙ von 500 g/Mol. Als Nukleierungsmittel wurde Dibenzylidensorbitol verwendet. Die jeweiligen Rohstoffmischungen wurden in einem Zweischneckenkneter hergestellt.

### Serie 1

Mischungen der unten beschriebenen Komponenten wurden extrudiert, um den Faktor 6 längsverstreckt und anschliessend senkrecht zur Längsrichtung so querverstreckt, daß das Produkt von Längs- und Querstreckverhältnis 50 betrug.

| | Rezeptur | E-Modul (längs) N/mm² | Spannung bei 10 % Dehnung (längs) N/mm² | Schrumpf % |
|---|---|---|---|---|
| Beispiel 1 | 79,9 % PP | 3 480 | 65 | 5,7 |
| | 20 % Harz | | | |
| | 0,1 % Nukleierungsmittel | | | |
| Beispiel 2 | 79,75 % PP | 3 560 | 68 | 4,9 |
| | 20 % Harz | | | |
| | 0,25 % Nukleierungsmittel | | | |
| Vergleichsbeispiel 1 | 80 % PP | 3 250 | 62 | 4,5 |
| | 20 % Harz | | | |
| Vergleichsbeispiel 2 | 100 % PP | 2 270 | 50 | 2,3 |

### Serie 2

Mischungen der unten beschriebenen Komponenten wurden extrudiert, um den Faktor 7 längsverstreckt und anschliessend senkrecht zur Längsrichtung so querverstreckt, daß das Produkt von Längs- und Querstreckverhältnis 59 betrug.

| | Rezeptur | E-Modul (längs) N/mm² | Spannung bei 10 % Dehnung (längs) N/mm² | Schrumpf % |
|---|---|---|---|---|
| Beispiel 3 | 79,9 % PP | 3 930 | 83 | 5,9 |
| | 20 % Harz | | | |
| | 0,1 % Nukleierungsmittel | | | |
| Beispiel 4 | 79,75 % PP | 3 910 | 84 | 5,6 |
| | 20 % Harz | | | |
| | 0,25 % Nukleierungsmittel | | | |
| Vergleichsbeispiel 3 | 80 % PP | 3 690 | 78 | 5,3 |
| | 20 % Harz | | | |
| Vergleichsbeispiel 4 | 100 % PP | 2 600 | 64 | 2,7 |

### Serie 3

Mischungen der unten beschriebenen Komponenten wurden extrudiert, um den Faktor 8 längsverstreckt und anschliessend senkrecht zur Längsrichtung so querverstreckt, daß das Produkt von Längs- und Querstreckverhältnis 67 betrug.

| | Rezeptur | E-Modul (längs) N/mm² | Spannung bei 10 % Dehnung (längs) N/mm² | Schrumpf % |
|---|---|---|---|---|
| Beispiel 5 | 79,9 % PP | 4 510 | 110 | 7,0 |
| | 20 % Harz | | | |
| | 0,1 % Nukleierungsmittel | | | |
| Beispiel 6 | 79,75 % PP | 4 460 | 107 | 7,2 |
| | 20 % Harz | | | |
| | 0,25 % Nukleierungsmittel | | | |
| Vergleichsbeispiel 5 | 80 % PP | 4 100 | 100 | 6,9 |
| | 20 % Harz | | | |
| Vergleichsbeispiel 6 | 100 % PP | ^{x)} | ^{x)} | ^{x)} |
| ^{x)} Bei den oben angegebenen Streckbedingungen war mit unmodifiziertem Polypropylen die Herstellung von orientierter Folie aufgrund von Abrissen nicht mehr möglich. | | | | |

Für die Messungen der Werte in den vorstehenden Tabellen wurden Probestreifen einer Breite von 15 mm hergestellt.

Alle auftretenden Kräfte wurden auf den Folienquerschnitt bezogen.
1.) Zur Bestimmung des Elastizitätsmoduls wurde bei einer Einspannlänge von 200 mm eine Abzugsgeschwindigkeit von 0,33 mm/s (≙ 10 %/min) eingestellt. Die Dehnung wurde bis 0,7 % durchgeführt.
2.) Zur Bestimmung der Spannung bei 10 % Dehnung wurde bei einer Einspannlänge von 100 mm eine Abzugsgeschwindigkeit von 1,66 mm/s (≙ 100 %/60 s) eingestellt. Die Dehnung wurde bis 10 % durchgeführt.
3.) Der Schrumpf wurde gemessen, indem die Folie 15 min in einem Umluftofen einer Lufttemperatur von 120 °C ausgesetzt wurde. Die Prozentangaben betreffen den Schrumpf der Folie in Längsrichtung.

## Patentansprüche

1. Biaxial orientierte Polyolefinfolie mit hoher mechanischer Festigkeit, dadurch gekennzeichnet, daß sie 69 bis 94,99 Gew.-% eines isotaktischen Polypropylen mit einer ¹³ C-NMR spektroskopisch bestimmten Isotaktizität von größer als 92 %, 5 bis 30 Gew.-% eines natürlichen oder synthetischen Harzes, welches einen Erweichungspunkt von 70 bis 170 °C besitzt, und 0,01 bis 1 Gew.-% eines Nukleierungsmittels enthält, bezogen auf das Gesamtgewicht der Folie und daß die Dicke der Folie 8-50 µm beträgt.

2. Folie nach Anspruch 1, dadurch gekennzeichnet, daß sie als Harz ein nichthydriertes Styrolpolymerisat, ein Methylstyrol-Styrol-Copolymerisat, ein Pentadien- bzw. Cyclopentadiencopolymerisat, ein Alpha- oder Beta-Pinen-Polymerisat, Kolophonium oder Kolophoniumderivate oder Terpenpolymerisate und hydrierte Verbindungen hiervon bzw. ein hydriertes Alpha-Methylstyrol-Vinyltoluol-Copolymerisat oder ggf. Mischungen von diesen enthält.

3. Folie nach Anspruch 1, dadurch gekennzeichnet, daß sie als Nukleierungsmittel Stoffe enthält, die die differentialkalorimetrisch bestimmte Kristallisationshalbwertszeit um mindestens 25 % herabsetzen.

4. Folie nach Anspruch 3, dadurch gekennzeichnet, daß die Nukleierungsmittel organische Substanzen sind, vorzugsweise Dibenzylidensorbitol oder chemisch modifizierte Derivate des Dibenzylidensorbitols oder Natrium-Bis(4-tert.-butylphenyl)phosphat oder Metallsalze der Benzoesäure, vorzugsweise Natriumbenzoat, oder Chinacridon oder Chinacridonderivate.

5. Folie nach Anspruch 3, dadurch gekennzeichnet, daß die Nukleierungsmittel anorganische Substanzen sind, vorzugsweise Talkum, Siliziumdioxid oder Bentonit.

6. Folie nach einem der Ansprüche 1 bis 5, dadurch gekennzeichnet, daß sie eine Dicke im Bereich von von 15 bis 40 Mikrometern, besitzt.

7. Folie nach einem der Ansprüche 1 bis 6, dadurch gekennzeichnet, daß sie wenigstens einseitig, vorzugsweise beidseitig, funktionelle Deckschichten trägt, die der Folie Heißsiegelfähigkeit, eine bessere Verankerung des Klebers oder gute Verarbeitungseigenschaften auf schnell-laufenden Maschinen vermitteln.

8. Folie nach Anspruch 7, dadurch gekennzeichnet, daß die Deckschichten zusätzlich geeignete Antiblockmittel und/oder Antistatika enthalten.

9. Verwendung einer Folie nach einem der Ansprüche 1 bis 8 als Trägerfolie für Klebebänder.

## Claims

1. Biaxially oriented polyolefin film having a high mechanical strength, wherein the film comprises 69 to 94.99 % by weight of an isotactic polypropylene having an isotactic value of more than 92 % (determined by means of ¹³C-NMR spectroscopic method), 5 to 30 % by weight of a natural or synthetic resin having a softening point in the range from 70 to 170 °C, and 0.01 to 1 % by weight of a nucleating agent, based on the total weight of the film, and wherein the thickness of the film is 8 to 50 µm.

2. The film as claimed in claim 1, wherein said resin contained in the film comprises a non-hydrogenated styrene polymer, a methylstyrene-styrene copolymer, a pentadiene or cyclopentadiene copolymer, an alpha- or beta-pinene polymer, colophony or colophony derivatives, or terpene polymers and hydrogenated compounds thereof, or a hydrogenated alpha-methylstyrene-vinyltoluene copolymer or, if appropriate, mixtures of these.

3. The film as claimed in claim 1, wherein said nucleating agents contained in the film comprise substances which reduce the crystallization half-time (t_{1/2}), as determined by differential scanning calorimetry, by at least 25 %.

4. The film as claimed in claim 3, wherein said nucleating agents comprise organic substances, preferably dibenzylidene sorbitol or chemically modified derivatives of dibenzylidene sorbitol, or sodium-bis(4-tert.-butylphenyl)phosphate, or metal salts of benzoic acid, preferably sodium benzoate, or quinacridone or quinacridone derivatives.

5. The film as claimed in claim 3, wherein said nucleating agents comprise inorganic substances, preferably talcum, silicon dioxide or bentonite.

6. The film as claimed in any of claims 1 to 5, wherein the film thickness is in the range from 15 to 40 µm.

7. The film as claimed in any of claims 1 to 6, which carries a functional covering layer on at least one side, preferably on both sides, to impart to the film heat sealability, improved anchoring of an adhesive, or good processing characteristics in high-speed machines.

8. The film as claimed in claim 7, wherein said covering layers additionally contain appropriate antiblocking agents and/or antistatic agents.

9. Use of the film as claimed in any of claims 1 to 8 as a base film for adhesive tapes.

## Revendications

1. Film en polyoléfine orienté biaxialement à haute résistance mécanique, caractérisé en ce qu'il contient 69 à 94,99 % en poids d'un polypropylène isotactique d'isotacticité (déterminée par spectroscopie ¹³C-RMN) supérieure a 92 %, 5 à 30 % en poids d'une résine naturelle ou synthétique de point de ramollissement 70-170°C, et 0,01 % à 1 % en poids d'un agent de nucléation, par rapport au poids total du film, et que son épaisseur est de 8 à 50 µm.

2. Film selon la revendication 1, caractérisé en ce qu'il contient, comme résine, un polymère de styrène non hydrogéné, un copolymère méthylstyrène/styrène, un copolymère de pentadiène ou de cyclopentadiène, un polymère d'alpha- ou de béta-pinène, de la colophane ou un dérivé de colophane, un polymère terpénique ou un de ses dérivés hydrogénés, un copolymère alpha-méthylstyrène/vinyltoluène hydrogéné, ou éventuellement un mélange de plusieurs de ces résines.

3. Film selon la revendication 1, caractérisé en ce qu'il contient, comme agents de nucléation, des substances qui abaissent d'au moins 25 % le temps de demi-cristallisation déterminé par analyse calorimétrique différentielle.

4. Film selon la revendication 3, caractérisé en ce que les agents de nucléation sont des substances organiques, de préférence du dibenzylidènesorbitol ou des dérivés chimiquement modifiés du dibenzylidènesorbitol ou bien du bis(4-tert-butylphényl)phosphate de sodium ou des sels métalliques de l'acide benzoïque, de préférence du benzoate de sodium, ainsi que de la quinacridone ou des dérivés de quinacridone.

5. Film selon la revendication 3, caractérisé en ce que les agents de nucléation sont des substances minérales, de préférence du talc, du dioxyde de silicium ou de la bentonite.

6. Film selon une quelconque des revendications 1 à 5, caractérisé en ce qu'il présente une épaisseur de l'ordre de 15 à 40 µm.

7. Film selon une quelconque des revendications 1 à 6, caractérisé en ce qu'il comporte au moins sur une face, de préférence sur les deux faces, des couches de surface fonctionnelles pouvant conférer au film de la scellabilité à chaud, un meilleur ancrage de l'adhésif ou de bonnes aptitudes à l'usinage sur machines rapides.

8. Film selon la revendication 7, caractérisé en ce que les couches de surface contiennent en outre des agents antiadhérents et/ou antistatiques appropriés.

9. Utilisation d'un film selon une quelconque des revendications 1 à 8, comme film support pour bandes adhésives.
